# EUROPÄISCHE PATENTSCHRIFT

(11) **EP 0 703 051 B1**
(45) Veröffentlichungstag und Bekanntmachung des Hinweises auf die Patenterteilung: **07.10.1998**
(21) Anmeldenummer: 95107074.7
(22) Anmeldetag: 10.05.1995
(51) Int. Cl.: B29C 45/16, B29C 65/02

(54) **Verfahren zum Herstellen eines Anzeigefeldes**
Method for manufacturing a display area
Procédé de fabrication d'un champ d'affichage

(30) Priorität: 21.09.1994 DE 4433580
(43) Veröffentlichungstag der Anmeldung: 27.03.1996
(73) Patentinhaber: Max Kammerer GmbH, 61440 Oberursel (DE)
(72) Erfinder: Langer, Franz, D-55276 Oppenheim (DE); Schmidt, Norbert, D-64297 Darmstadt (DE)
(74) Vertreter: Rassler, Andrea, Dipl.-Phys.

(56) Entgegenhaltungen:
- EP-A- 0 495 219
- EP-A- 0 534 179
- DE-A- 1 942 932
- DE-C- 4 006 649
- PATENT ABSTRACTS OF JAPAN vol. 013 no. 193 (M-822) ,9.Mai 1989 & JP-A-01 018617 (NIPPON PLAST CO LTD) 23.Januar 1989,
- PATENT ABSTRACTS OF JAPAN vol. 012 no. 055 (M-669) ,19.Februar 1988 & JP-A-62 201215 (NISSHA PRINTING CO LTD) 4.September 1987,

## Beschreibung

Die Erfindung bezieht sich auf ein Verfahren zum Herstellen eines Anzeigefeldes, mit einer als Spritzgußteil ausgebildeten Platte aus einem Kunststoff, auf der eine Kunststoffolie durch Verschweißen flächig angeordnet ist, wobei die Platte im Spritzgußverfahren hergestellt wird und abkühlt, wobei weiterhin die Kunststoffolie auf eine Fläche der abgekühlten Platte aufgebracht wird und wobei die Kunststoffolie gegen die Platte druckbeaufschlagt und durch die Druckbeaufschlagung mit der Platte materialschlüssig verschweißt wird.

Bei Verfahren zum Herstellen eines Anzeigefeldes ist es bekannt, die Kunststoffolie in eine Spritzgußform einzulegen und dann die Lichtleitplatte auf die Kunststoffolie zu spritzen. Besitzt dabei die Kunststoffolie auf der Seite der Lichtleitplatte eine Farbbeschichtung, kann es durch das Fließen des unter hohem Druck stehenden heißen Kunststoffs der Lichtleitplatte zu einem teilweisen Ablösen der Farbbeschichtung und somit einem Schmieren der Farbe kommen. Damit ist keine einwandfreie Trennung der farbbeschichteten und farbfreien Bereiche mehr gegeben.

Ein weiteres Verfahren besteht darin, daß die Kunststoffolie auf einer vorgefertigten, bereits erkalteten Lichtleitplatte angeordnet und unter Druckbeaufschlagung und Erhitzung mit der Lichtleitplatte verschweißt wird. Dieses Verfahren ist äußerst zeitaufwendig.

Aus der EP-A-0 534 179 ist ein Verfahren zum Herstellen eines Kunststoff-Formlings der eingangs genannten Art bekannt, bei dem eine Abkühlung der Platte erfolgt, bis eine dünne Oberflächenschicht oder Oberflächenhaut verfestigt ist. Nach Öffnen der Form und Abheben der oberen Formhälfte versetzt die im Kunststoffmaterial noch enthaltene Wärme den Formling wieder in einen fließ- und/oder klebfähigen Zustand. Nach Aufbringen der Kunststoffolie wird die Form wieder geschlossen und der Formling mit der Kunststoffolie durch Verpressen bleibend verbunden.

Aufgabe der Erfindung ist es, ein Verfahren der eingangs genannten Art zu schaffen, das bei geringem Zeitaufwand ein fehlerfreie Herstellung eines Anzeigefeldes ermöglicht.

Diese Aufgabe wird erfindungsgemäß dadurch gelöst, daß die Platte eine Lichtleitplatte (7) aus einem transparenten bzw. diffustransparenten Kunststoff und die Kunststoffolie (13) eine beobachterseitig auf der Lichtleitplatte (7) aufgebrachte lichtdurchscheinende Kunststoffolie (13) ist, daß die Lichtleitplatte (7) bis zum Erreichen einer Formstabilität abkühlt und die Kunststoffolie (13) auf die Fläche der bis zum Erreichen der Formstabilität abgekühlten Lichtleitplatte (7) aufgebracht wird.

Dadurch, daß die Lichtleitplatte nach ihrer Herstellung nur bis zum Erreichen einer Formstabilität abkühlt, besitzt sie noch eine derart hohe Temperatur, daß sie zum Verschweißen mit der Kunststoffolie ausgenutzt werden kann. Auf einen separaten Heizvorgang sowie eine dafür erforderliche Heizvorrichtung kann somit verzichtet werden.

Da auch nicht ein vorheriges vollständiges Erkalten der Lichtleitplatte erforderlich ist, kann das Anzeigefeld in kurzer Zeit hergestellt werden.

Ein Fließen des Werkstoffs der Lichtleitplatte erfolgt ebenfalls nicht, so daß auch kein Schmieren von Farbe einer Farbbeschichtung der Kunststoffolie möglich ist.

Die Kunststoffolie kann eine durchscheinbare Farbbeschichtung aufweisen, mit der die Kunststoffolie auf die Lichtleitplatte aufgebracht und mit der Lichtleitplatte meterialschlüssig verschweißt wird. Die Farbbeschichtung kann dabei ganzflächig sein oder nur Teilbereiche abdecken die z. B. Zeichen und/oder Symbole darstellen.

Es ist auch möglich, daß die Kunststoffolie eine lichtdichte Abdeckbeschichtung mit Lichtdurchtrittsöffnungen in Form von Zeichen und/oder Symbolen aufweist, die auf die Lichtleitplatte aufgebracht und mit der Lichtleitplatte materialschlüssig verschweißt wird.

Dabei können ein Teil oder alle Bereiche der Lichtdurchtrittsöffnungen auch mit einer Farbbeschichtung versehen sein.

Um je nach verwendetem Kunststoff oder verwendetem Farbstoff eine gute Verbindung zwischen Kunststoffolie und Lichtleitplatte zu gewährleisten, kann die Kunststoffolie oder die Farbbeschichtung und/oder die Abdeckbeschichtung mit einer Haftvermittlerschicht versehen auf die Lichtleitplatte aufgebracht und mit der Lichtleitplatte materialschlüssig verschweißt werden.

Eine besonders geringe Herstellungszeit und eine kostengünstige Mehrfachverwendung von Werkzeugen wird erreicht, wenn die Lichtleitplatte in einer zumindest zweiteiligen Form hergestellt wird, deren eines Formteil die Rückseite der Lichtleitplatte aufnimmt und gleichzeitig Formteil für einen zweiten Spritzgußvorgang ist, daß ein mit dem ersten Formteil korrespondierendes etwa topförmiges zweites Formteil die auf die Vorderseite der Lichtleitplatte aufgebrachte Kunststoffolie flächig gegen die Lichtleitplatte beaufschlagend mit dem ersten Formteil in Verbindung gebracht wird, wobei ein sich an den umlaufenden Randbereich der Lichtleitplatte anschließender Ringraum gebildet ist, in den anschließend in dem zweiten Spritzvorgang Kunststoff eingespritzt wird.

Dabei kann der an den Randbereich der Lichtleitplatte anschließende Ringraum sich etwa rohrartig zur Rückseite der Lichtleitplatte erstrecken, so daß das fertig hergestellte Bauteil eine topfartige Form erhält und als beleuchtbare Drucktaste für einen Tastenschalter verwendet werden kann.

Die Kunststoffolie kann entweder vor in Verbindung bringen des zweiten mit dem ersten Formteil auf die Lichtleitplatte aufgebracht werden, oder in das Formnest des zweiten Formteils eingelegt und durch das in Verbindung bringen des zweiten mit dem ersten Formteil zur Auflage auf die Lichtleitplatte gebracht werden.

Zum Aufpressen der Kunststoffolie auf die Lichtleitplatte können die beiden Formteile relativ zueinander druckbeaufschlagt werden.

Eine andere Möglichkeit besteht darin, daß der Spritzdruck des Spritzvorgangs zum Ausfüllen des Ringraumes die Kunststoffolie zur Auflage auf die Lichtleitplatte preßt. Dieses zweite Verfahren benötigt keine besonderen Vorrichtungen zur Druckbeaufschlagung und ist somit einfacher und schneller durchführbar.

Die Kunststoffolie kann über den Randbereich der Lichtleitplatte hervorstehen, in den Ringraum an der Wandung des zweiten Formteils anliegend hineinragen und mit dem den Ringraum ausfüllenden Kunststoff verbunden werden, wodurch eine gleichmäßige Oberflächenstruktur sowohl auf der Frontseite als auch an dem umlaufenden Randbereich des herzustellenden Bauteils erreicht wird.

Ein nach dem vorgenannten Verfahren hergestelltes Anzeigefeld ist vorzugsweise so ausgebildet, daß die Lichtleitplatte und/oder die Kunststoffolie aus einem thermoplastischen Kunststoff bestehen. Ist dabei der thermoplastische Kunststoff Polycarbonat, Acrylnitrilbutadienstyrol oder Polymethylmetacrylat, so ergibt sich eine besonders gute und haltbare Verschweißbarkeit von Lichtleitplatte und Kunststoffolie.

Ein Ausführungsbeispiel ist in der Zeichnung dargestellt und wird im folgenden näher beschrieben.

Es zeigen:
- Fig. 1: Eine Spritzgießform zum Herstellen einer Lichtleitplatte.
- Fig. 2: Eine Spritzgießform zum Herstellen eines Anzeigefeldes.

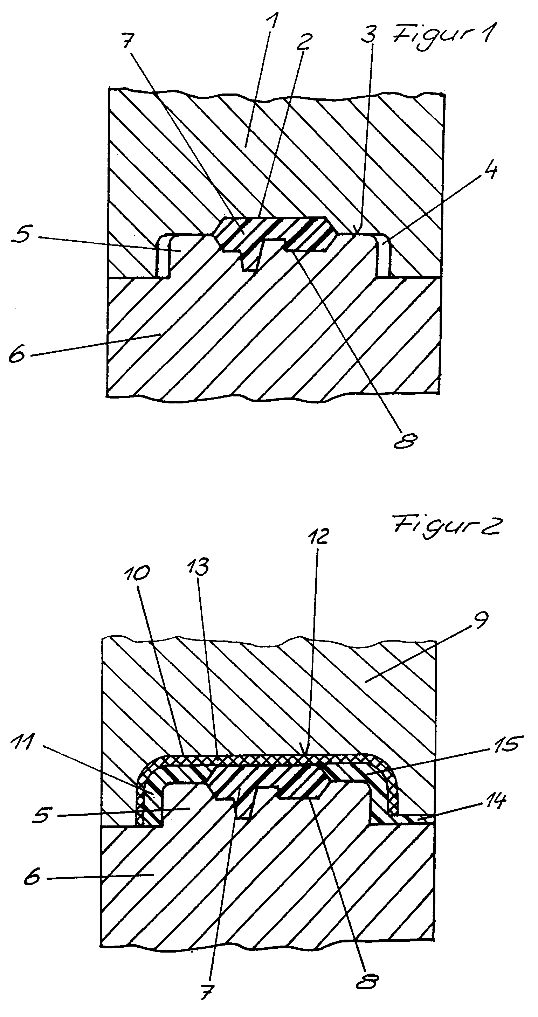

Die in Fig. 1 dargestellte Spritzgießform zum Herstellen einer Lichtleitplatte 7 besteht aus einem oberen Formteil 1 mit einem ersten Formnest 2. Dieses erste Formnest 2 ist im Boden 3 einer topfförmigen Ausnehmung 4 des oberen Formteils 1 ausgebildet.

In diese topfförmige Ausnehmung 4 ragt ein etwa entsprechender Ansatz 5 eines unteren Formteils 6 der Spritzgußform. An der dem Boden 3 zugewandten Stelle des Ansatzes 5 ist ein zweites Formnest 8 ausgebildet, das zusammen mit dem Formnest 2 des oberen Formteils 1 die Ausnehmung zum Spritzen der Lichtleitplatte 7 bildet.

In Fig. 1 ist bereits durch eine nicht dargestellte Einspritzöffnung im unteren Formteil 6 ein glasklarer Werkstoff in die Spritzgießform eingespritzt und so die Lichtleitplatte 7 hergestellt.

Nach Entfernen des oberen Formteils 2 wird an dessen Stelle ein weiteres oberes Formteil 9 angeordnet. Dieses besitzt ebenfalls ein Formnest 10, welches topfförmig ausgebildet ist. Das Formnest 10 umschließt den Ansatz 5 in einem Abstand so, daß zwischen dem Ansatz 5 und dem Formnest 10 ein Ringraum 11 gebildet ist. Der Boden 12 des Formnestes 10 ist eben.

Vor dem Zusammenführen der Formteile 6 und 9 wurde eine Kunststoffolie 13 in das Formnest 10 eingelegt. Im Bereich der Lichtleitplatte 7 liegt der Boden des Formnests 10 über die Kunststoffolie 13 auf der Lichtleitplatte 7 auf.

Die Kunststoffolie 13 kann auf der dem Formteil 6 zugewandten Seite mit einer durchscheinbaren Farbbeschichtung oder auch mit einer lichtdichten Farbbeschichtung versehen sein, die Lichtdurchtrittsöffnungen in Form von Zeichen und Symbolen aufweist.

Das Zuführen des Formteils 9 zum Formteil 6 erfolgt zu einem Zeitpunkt, zu dem die weiterhin im Formnest 8 befindliche Lichtleitplatte 7 noch sehr warm und nur bis zum Erreichen einer Formstabilität abgekühlt ist.

In den durch das Zusammenführen der Formteile 6 und 9 gebildeten Ringraum 11 wird nun unter hohem Druck eine Kunststoffmasse über einen Spritzeinlaß 14 eingespritzt, die den Ringraum 11 ausfüllt und aufgrund ihrer hohen Temperaturen und ihres Spritzdruckes mit der Kunststoffolie 13 und dem angrenzenden Bereich der Lichtleitplatte 7 materialschlüssig verschweißt.

Darüber hinaus wirkt der in der Formkammer vorhandene Spritzdruck aber auch auf die Lichtleitplatte 7 und die Kunststoffolie 13, so daß diese gegeneinandergepreßt werden. Da der Werkstoff der Lichtleitplatte 7 noch eine sehr hohe Temperatur besitzt, kommt es aufgrund dieser Temperatur und aufgrund des hohen Spritzdruckes auch zwischen der Lichtleitplatte 7 und der Kunststoffolie 13 zu einer materialschlüssigen Verschweißung.

Der Kunststoff, der in den Ringraum 11 eingespritzt wird, ist vorzugsweise ein nichtdurchleuchtbarer Kunststoff und bildet einen ringartigen, lichtundurchlässigen Rahmen 15 für die durchleuchtbare Lichtleitplatte 7.

Das aus Lichtleitplatte 7, Rahmen 15 und Kunststoffolie 13 gebildete Bauteil kann eine Drucktaste für einen Tastenschalter sein.

## Patentansprüche

1. Verfahren zum Herstellen eines Anzeigefeldes, mit einer als Spritzgußteil ausgebildeten Platte aus einem Kunststoff, auf der eine Kunststoffolie (13) durch Verschweißen flächig angeordnet ist, wobei die Platte im Spritzgußverfahren hergestellt wird und abkühlt, wobei weiterhin die Kunststoffolie (13) auf eine Fläche der abgekühlten Platte aufgebracht wird und wobei die Kunststoffolie (13) gegen die Platte druckbeaufschlagt und durch die Druckbeaufschlagung mit der Platte materialschlüssig verschweißt wird, **dadurch gekennzeichnet**, daß die Platte eine Lichtleitplatte (7) aus einem transparenten bzw. diffustransparenten Kunststoff und die Kunststoffolie (13) eine beobachterseitig auf der Lichtleitplatte (7) aufgebrachte lichtdurchscheinende Kunststoffolie (13) ist, daß die Lichtleitplatte (7) bis zum Erreichen einer Formstabilität abkühlt und die Kunststoffolie (13) auf die Fläche der bis zum Erreichen der Formstabilität abgekühlten Lichtleitplatte (7) aufgebracht wird.

2. Verfahren nach Anspruch 1, **dadurch gekennzeichnet**, daß die Kunststoffolie (13) eine durchscheinbare Farbbeschichtung aufweist, mit der die Kunststoffolie (13) auf die Lichtleitplatte (7) aufgebracht und mit der Lichtleitplatte (7) materialschlüssig verschweißt wird.

3. Verfahren nach einem der vorhergehenden Ansprüche, **dadurch gekennzeichnet**, daß die Kunststoffolie eine Lichtdichte Abdeckbeschichtung mit Lichtdurchtrittsöffnungen in Form von Zeichen und/oder Symbolen aufweist, die auf die Lichtleitplatte aufgebracht und mit der Lichtleitplatte materialschlüssig verschweißt wird.

4. Verfahren nach einem der vorhergehenden Ansprüche, **dadurch gekennzeichnet**, daß die Kunststoffolie oder die Farbbeschichtung und/oder die Abdeckbeschichtung mit einer Haftvermittlerschicht versehen auf die Lichtleitplatte aufgebracht und mit der Lichtleitplatte materialschlüssig verschweißt wird.

5. Verfahren nach einem der vorhergehenden Ansprüche, **dadurch gekennzeichnet**, daß die Lichtleitplatte (7) in einer zumindest zweiteiligen Form hergestellt wird, deren eines Formteil (6) die Rückseite der Lichtleitplatte (7) aufnimmt und gleichzeitig Formteil für einen zweiten Spritzgußvorgang ist, daß ein mit dem ersten Formteil (6) korrespondierendes etwa topfförmiges zweites Formteil (9) die auf der Vorderseite der Lichtleitplatte (7) aufgebrachte Kunststoffolie (13) flächig gegen die Lichtleitplatte (7) beaufschlagend mit dem ersten Formteil (6) in verbindung gebracht wird, wobei ein sich an den umlaufenden Randbereich der Lichtleitplatte (7) anschließender Ringraum (11) gebildet ist, in den anschließend in dem zweiten Spritzvorgang Kunststoff eingespritzt wird.

6. Verfahren nach Anspruch 5, **dadurch gekennzeichent**, daß der an den Randbereich der Lichtleitplatte (7) anschließende Ringraum (11) sich etwa rohrartig zur Rückseite der Lichtleitplatte (7) erstreckt.

7. Verfahren nach Anspruch 5, **dadurch gekennzeichnet**, daß die Kunststoffolie vor in Verbindung bringen des zweiten mit dem ersten Formteil auf die Lichtleitplatte aufgebracht wird.

8. Verfahren nach Anspruch 5, **dadurch gekennzeichnet**, daß die Kunststoffolie (13) in das Formnest (10) des zweiten Formteils (9) eingelegt und durch das in Verbindung bringen des zweiten mit dem ersten Formteil (9, 6) zur Auflage auf die Lichtleitplatte (7) gebracht wird.

9. Verfahren nach einem der Ansprüche 5 bis 8, **dadurch gekennzeichnet**, daß die beiden Formteile (6, 9) relativ zueineinander druckbeaufschlagt werden.

10. Verfahren nach einem der Ansprüche 5 bis 8, **dadurch gekennzeichnet**, daß der Spritzdruck des Spritzvorgangs zum Ausfüllen des Ringraums (11) die Kunststoffolie (13) zur Auflage auf die Lichtleitplatte (7) preßt.

11. Verfahren nach einem der Ansprüche 5 bis 10, **dadurch gekennzeichnet**, daß die Kunststoffolie (13) über den Randbereich der Lichtleitplatte (7) hervorsteht, in den Ringraum (11) an der Wandung des zweiten Formteils (9) anliegend hineinragt und mit dem den Ringraum (11) ausfüllenden Kunststoff verbunden wird.

12. Nach dem Verfahren gemäß einem der Ansprüche 1 bis 11 hergestelltes Anzeigefeld, **dadurch gekennzeichnet**, daß die Lichtleitplatte (7) und/oder die Kunststoffolie (13) aus einem thermoplastischem Kunststoff bestehen.

13. Anzeigefeld nach Anspruch 12, **dadurch gekennzeichnet**, daß der thermoplastische Werkstoff Polycarbonat ist.

14. Anzeigefeld nach Anspruch 12, **dadurch gekennzeichnet**, daß der thermoplastische Werkstoff Acrylnitrilbutadienstyrol ist.

15. Anzeigefeld nach Anspruch 12, **dadurch gekennzeichnet**, daß der thermoplastische Werkstoff Polymethylmetacrylat ist.

## Claims

1. A method of manufacturing a display area, having a panel made of plastic, which is constructed as an injection moulded part and on which a plastic film (13) is placed flat by welding, wherein the panel is manufactured by an injection moulding process and cooled, wherein in addition the plastic film (13) is applied to a face of the cooled panel and wherein the plastic film (13) is acted on by pressure against the panel and is welded to the panel with the formation of a material bond, **characterised in that** the panel is a light guide panel (7) made of a transparent or diffuse-transparent plastic and the plastic film (13) is a plastic film (13) which is applied to the light guide panel (7) on the side of the observer, that the light guide panel (7) is cooled to achieve dimensional stability and the plastic film (13) is applied to the face of the light guide panel (7) which is cooled to achieve dimensional stability.

2. A method according to claim 1, **characterised in that** the plastic film (13) has a translucent coloured coating with which the plastic film (13) is applied to the light guide panel (7) and to which the light guide panel (7) is welded with the formation of a material bond.

3. A method according to either one of the preceding claims, **characterised in that** the plastic film has a light-proof masking coating comprising light passageway openings in the form of characters and/or symbols, which coating is applied to the light guide panel and is welded to the light guide panel with the formation of a material bond.

4. A method according to any one of the preceding claims, **characterised in that** the plastic film or the coloured coating and/or the masking coating is provided with a bonding agent layer and applied to the light guide panel, and is welded to the light guide panel with the formation of a material bond.

5. A method according to any one of the preceding claims, **characterised in that** the light guide panel (7) is produced in a mould comprising at least two parts, one mould part (6) of which receives the back of the light guide panel (7) and at the same time is a mould part for a second injection moulding operation, that an approximately pot-shaped second mould part (9) corresponding to the first mould part (6) is brought into communication with the first mould part (6) whilst pressing the plastic film (13) applied to the front side of the light guide panel (7) flat against the light guide panel (7), wherein an annular space (11) is formed, which adjoins the surrounding edge region of the light guide panel (7); and into which plastic is subsequently injection moulded in the second injection moulding operation.

6. A method according to claim 5, **characterised in that** the annular space (11) which adjoins the edge region of the light guide panel (7) extends approximately in the form of a tube towards the back of the light guide panel (7).

7. A method according to claim 5, **characterised in that** the plastic film is applied to the light guide panel before the second mould part is brought into communication with the first mould part.

8. A method according to claim 5, **characterised in that** the plastic film (13) is inserted in the mould cavity (10) of the second mould part (9) and is brought into contact with the light guide panel (7) by the joining of the second and first mould parts (9, 6).

9. A method according to any one of claims 5 to 8, **characterised in that** the two mould parts (6, 9) are acted on by pressure in relation to each other.

10. A method according to any one of claims 5 to 8, **characterised in that** the injection moulding pressure of the injection moulding operation for filling the annular space (11) presses the plastic film (13) into contact with the light guide panel (7).

11. A method according to any one of claims 5 to 10, **characterised in that** the plastic film (13) protrudes beyond the edge region of the light guide panel (7), projects contiguously into the annular space (11) on the wall of the second mould part (9) and is joined to the plastic filling the annular space (11).

12. A display area manufactured by the method according to any one of claims 1 to 11, **characterised in that** the light guide panel (7) and/or the plastic film (13) consist of a synthetic thermoplastic material.

13. A display area according to claim 12, **characterised in that** the synthetic thermoplastic material is polycarbonate.

14. A display area according to claim 12, **characterised in that** the synthetic thermoplastic material is acrylonitrile-butadiene-styrene.

15. A display area according to claim 12, **characterised in that** the synthetic thermoplastic material is polymethyl methacrylate.

## Revendications

1. Procédé de fabrication d'un champ de visuel comportant une plaque en plastique, conçue sous forme d'une pièce coulée par injection sur laquelle est disposée à plat, par soudage, une feuille de plastique (13), dans lequel la plaque est fabriquée par le procédé de coulée par injection puis refroidie, dans lequel on applique en outre la feuille de plastique (13) sur une surface de la plaque refroidie et dans lequel la feuille de plastique (13) est contrainte, par pression, contre la plaque et, du fait de la contrainte de pression, se soude à la plaque, par liaison de matériau à matériau, caractérisé par le fait que la plaque est une plaque conductrice de la lumière (7) constituée d'un plastique transparent ou laissant passer une lumière diffuse et la feuille de plastique (13) est une feuille de plastique (13) translucide appliquée sur la plaque conductrice de la lumière (7) du côté de l'observateur, qu'on laisse refroidir la plaque conductrice de la lumière (7) jusqu'à obtenir une stabilité de forme et qu'on applique la feuille de plastique (13) sur la surface de la plaque conductrice de la lumière (7), ayant refroidi pour atteindre la stabilité de forme.

2. Procédé selon la revendication 1, caractérisé par le fait que la feuille de plastique (13) présente une couche mince colorée translucide par laquelle la feuille de plastique (13) s'applique sur la plaque conductrice de la lumière (7) et se soude à la plaque conductrice de la lumière (7) par liaison de matériau à matériau.

3. Procédé selon l'une des revendications précédentes, caractérisé par le fait que la feuille de plastique présente une couche mince de couverture étanche à la lumière, présentant des ouvertures de passage à la lumière sous forme de caractères et/ou de symboles, qui s'applique sur la plaque conductrice de la lumière et se soude à la plaque conductrice de la lumière par liaison de matériau à matériau.

4. Procédé selon l'une des revendications précédentes, caractérisé par le fait que la feuille de plastique ou la couche mince colorée et/ou la couche mince de couverture est munie d'une couche d'agent d'adhérence, s'applique sur la plaque conductrice de la lumière et se soude à la plaque conductrice de la lumière par liaison de matériau à matériau.

5. Procédé selon l'une des revendications précédentes, caractérisé par le fait que la plaque conductrice de la lumière (7) est fabriquée dans un moule en au moins deux pièces dont la première pièce de moule (6) reçoit la face arrière de la plaque conductrice de la lumière (7) et constitue simultanément une partie du moule pour un second processus de coulée par injection, qu'en liaison avec la première partie (6) de moule, on applique une seconde partie (9) du moule, correspondant à la première partie (6) du moule et à peu près en forme de boisseau, en contraignant à plat contre la plaque conductrice de la lumière (7) la feuille de plastique (13) appliquée sur la face avant de la plaque conductrice de la lumière (7), étant précisé qu'il se forme un espace annulaire (11) qui se raccorde à la zone de bordure périphérique de la plaque conductrice de la lumière (7) et dans lequel ensuite on injecte du plastique au cours du second processus d'injection.

6. Procédé selon la revendication 5, caractérisé par le fait que l'espace annulaire (11) qui se raccorde à la zone de bordure de la plaque conductrice de la lumière (7) s'étend à peu près sous forme tubulaire jusqu'à la face arrière de la plaque conductrice de la lumière (7).

7. Procédé selon la revendication 5, caractérisé par le fait que l'on applique la feuille de plastique sur la plaque conductrice de la lumière (7) avant de réunir la seconde partie du moule avec la première.

8. Procédé selon la revendication 5, caractérisé par le fait que l'on place la feuille de plastique (13) dans la poche (10) de la seconde partie (9) du moule et que c'est par la réunion de la seconde partie du moule avec la première partie du moule (9, 6) qu'elle s'applique sur la plaque conductrice de la lumière (7).

9. Procédé selon l'une des revendications 5 à 8, caractérisé par le fait que les deux parties (6, 9) du moule sont contraintes par pression l'une par rapport à l'autre.

10. Procédé selon l'une des revendications 5 à 8, caractérisé par le fait que c'est la pression d'injection du processus d'injection pour remplir l'espace annulaire (11) qui presse la feuille de plastique (13) pour l'appliquer sur la plaque conductrice de la lumière (7).

11. Procédé selon l'une des revendications 5 à 10, caractérisé par le fait que la feuille de plastique (13) déborde au-delà de la zone de bordure de la plaque conductrice de la lumière (7), pénètre dans l'espace annulaire (11) en s'appuyant contre la paroi de la seconde partie (9) du moule et se lie au plastique qui remplit l'espace annulaire (11).

12. Champ de visuel réalisé selon le procédé conforme à l'une des revendications 1 à 11, caractérisé par le fait que la plaque conductrice de la lumière (7) et/ou la feuille de plastique (13) sont constituées d'un plastique thermoplastique.

13. Champ de visuel selon la revendication 12, caractérisé par le fait que le matériau thermoplastique est du polycarbonate.

14. Champ de visuel selon la revendication 12, caractérisé par le fait que le matériau thermoplastique est de l'acrylonitrilbutadiènstyrène.

15. Champ de visuel selon la revendication 12, caractérisé par le fait que le matériau thermoplastique est du polyméthylmétacrylate.
